# EUROPEAN PATENT SPECIFICATION

(11) **EP 2 280 818 B1**
(45) Date of publication and mention of the grant of the patent: **29.10.2014**
(21) Application number: 09724124.4
(22) Date of filing: 25.03.2009
(51) Int. Cl.: B29C 70/34, B29C 70/44, B29D 99/00, B29L 31/00

(54) **METHOD FOR MANUFACTURING AN ELONGATED STRUCTURAL ELEMENT MADE OF COMPOSITE MATERIAL BY MEANS OF FORMING AND CURING IN AN AUTOCLAVE USING A VACUUM BAG**
VERFAHREN ZUR HERSTELLUNG EINES LÄNGLICHEN STRUKTURELEMENTS AUS EINEM VERBUNDWERKSTOFF MITTELS FORMEN UND AUSHÄRTEN IN EINEM AUTOKLAVEN UNTER VERWENDUNG EINES VAKUUMBEUTELS
PROCÉDÉ DE FABRICATION D'UN ÉLÉMENT STRUCTURAL ALLONGÉ FAIT D'UN MATÉRIAU COMPOSITE AU MOYEN D'UNE FORMATION ET D'UN DURCISSEMENT DANS UN AUTOCLAVE À L'AIDE D'UNE POCHE SOUS VIDE

(30) Priority: 27.03.2008 IT TO20080232
(43) Date of publication of application: 09.02.2011
(73) Proprietor: Alenia Aermacchi S.p.A., 00195 Roma (IT)
(72) Inventor: DELLI CARRI, Alfonso, I-71100 Foggia (IT); GROSSO, Felice, I-71100 Foggia (IT); IAGULLI, Gianni, I-71016 San Severo (Foggia) (IT); DE VITA, Vincenzo, I-70031 Andria (Bari) (IT); PINO, Agostino, I-13043 Cigliano (Vercelli) (IT)
(74) Representative: Vanzini, Christian
(86) International application number: PCT/IB2009/051242
(87) International publication number: WO 2009/118695

(56) References cited:
- WO-A2-2008/007140
- WO-A2-2009/044194
- US-A- 4 475 976
- US-A- 5 954 898
- "Ply collation: A major cost driver" In: F.C. Campbell: "Manufacturing processes for advanced composites" 2004, Elsevier , Oxford, UK , XP002535222 ISBN: 1-8561-7415-8 , pages 131-173 page 141 - page 144 figures 10,11,14,30 page 163 - page 171

## Description

The present invention relates to a method for manufacturing an elongated structural element made of composite material, wherein a mould having a convex male portion extending along said mould and projecting vertically from it is used, said method comprising the following steps:
- depositing in succession on a surface a plurality of prepreg reinforcing layers so as to obtain a strip-like laminate,
- positioning the laminate on said convex male portion of the mould and preparing an associated vacuum bag, and
- subjecting said laminate on the mould to a heat, vacuum and pressure cycle programmed to comprise a forming step arranged to cause adaptation of the form of the laminate to the convex male portion of the mould, and a subsequent curing step arranged to cause polymerization of the prepreg resin.

Methods of this type are known for example from WO 2008/007140 A2, and are discussed in "Ply collation: A major cost driver" (F.C. Campbell, "Manifacturing processes for advanced composites" 2004, Elsevier, pages 131-173). These methods are used in the aviation industry for the production, for example, of stringers or other stiffening/reinforcing elements arranged to be connected to the outer planking of the fuselage or to panels of other primary structures such as wings and tail empennages.

In the known methods, before the autoclave polymerization process, the laminate, formed by thermosetting resin prepreg layers, first undergoes a hot-forming process so as to cause adaptation thereof to the convex male portion of the mould. This forming process is usually performed by heating the laminate to a temperature lower than the ignition temperature of the polymerization step, but high enough to soften said laminate. Since the hot-forming process envisages that the laminate is inserted into a vacuum bag or similar membrane device, the action of the vacuum produced inside the bag or membrane device causes the film of the vacuum bag or the membrane to compress the softened laminate against the convex male portion of the mould causing adaptation of the laminate profile to that of the male portion of the mould.

The known methods are characterized by a high expenditure of resources, since the hot-forming step and autoclave polymerization step are performed using different apparatus. The associated operating sequence is therefore rather complex, since it requires special handling operations to transfer the parts from one apparatus to another, and involves downtime due to the fact that a forming apparatus usually cannot handle more than a few pieces at a time and this in any case requires an initial set-up step and a more or less prolonged heating and cooling thereof. Moreover, it is necessary to prepare two separate vacuum bags, one for the hot-forming process, and one for the autoclave cycle.

It would therefore be desirable to be able to dispense with the apparatus intended for the hot-forming process. On the other hand, these apparatuses allow the operator to monitor the development of the forming process and, if necessary, to intervene should problems arise (such as the formation of folds or undesirable air pockets in the vacuum bag film during creation of the vacuum), before irreparable damage to the piece being manufactured occurs. The autoclave process instead, by its very nature, does not allow the operator to take corrective action when in progress.

Considering the problem of the prior art above described, the invention relates to a method of the type defined at the outset,
wherein a bottom separator film is positioned on the mould before the laminate is positioned thereon, in such a way as that said bottom separator film is situated between the laminate and the mould, said bottom separator film having a low sliding friction with respect to the prepreg resin and the mould;
wherein the vacuum bag is prepared before the laminate is subjected to said forming step, the preparation of the vacuum bag comprising the following steps:
- covering the laminate with a top separator film;
- covering the top separator film with a ventilation layer having a set thickness which is substantially unaffected by the conditions of the heat, vacuum and pressure cycle, and
- applying hermetically onto the mould a high-stretch vacuum bag film so that said vacuum-bag film is substantially taut, enclosing said laminate in the manner of a tent;
and wherein said heat, vacuum and pressure cycle is also programmed so as that said forming step is performed in autoclave in sequence with said curing step, said forming step immediately preceding said curing step.

Said method according to the invention allows to avoid the use of a dedicated machine for the hot-forming process since it allows said forming operation to be performed inside the autoclave normally used for polymerization of the piece. This is possible owing to the special vacuum bag according to the invention, which allows hot-forming to be performed without the need for supervision by the operator when in progress.

By renouncing to the hot-forming machine, the associated machine and processing costs are eliminated. Moreover, the special vacuum bag according to the invention replaces the two separate vacuum bags used in the conventional processes and therefore reduces the amount of material used. It should be noted that, despite the innovative configuration of the vacuum bag according to the invention, the individual materials used are those normally available in the sector.

Preferred embodiments of the invention are described in the dependent claims.

A preferred, but non-limiting embodiment of the invention will now be described with reference to the accompanying drawings in which:
- Figure 1 is a simplified side-elevation view illustrating a step of the method where a laminate is deposited on a surface;
- Figure 2 is a simplified side-elevation view illustrating a step of the method where the laminate is positioned on a mould with a convex male portion;
- Figure 3 is a simplified perspective view illustrating a step of the method where the laminate on the mould undergoes heating and rolling;
- Figure 4 is a simplified side-elevation view illustrating a diagram of a vacuum bag for the laminate;
- Figure 5 illustrates the progression of the process parameters during a forming and polymerization step of the method according to the invention;
- Figure 6 is a simplified side-elevation view illustrating a structural element obtained from the laminate after the forming and polymerization step;
- Figures 7a and 7b are perspective views of examples of structural elements which have a cross-section like that of the component shown in Figure 6.

A method according to the invention intended for the production of a straight structural element, in particular a stringer, with an omega-shaped cross-section, will in the following be described. As will be understood more clearly from a reading of the description which follows, the invention is however not limited to the manufacture of stringers nor to a particular type of cross-section.

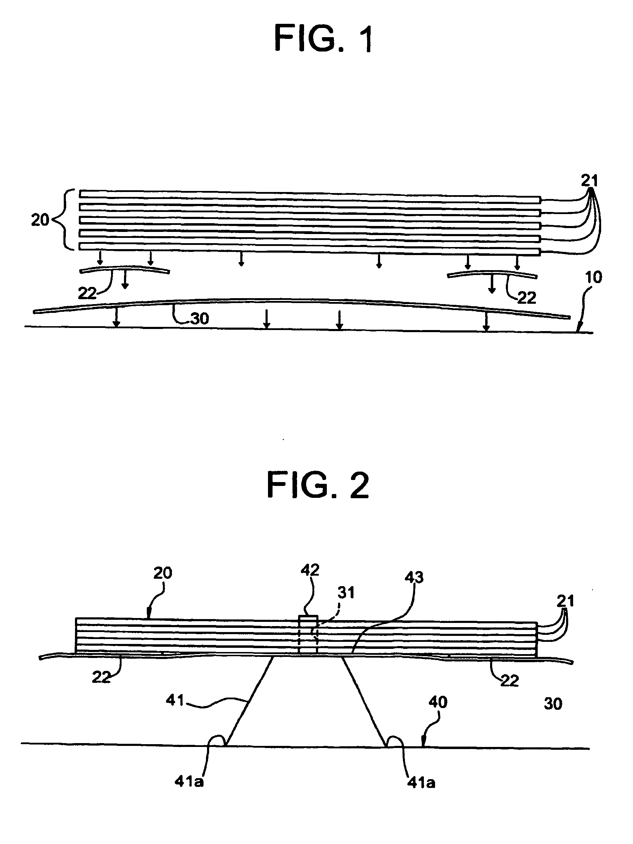

With reference to Figure 1, the method initially envisages laying in succession on a surface 10 a plurality of prepreg layers 21 so as to obtain a flat strip-like laminate 20. The term "laminate" is therefore understood as meaning all the stacked prepreg layers.

The lamination surface 10 is prepared in a conventional way for use in a clean room for the lamination of the prepreg layers.

For the purposes of the invention, the term "prepreg" is understood as meaning conventionally a semi-finished product comprising (usually carbon or glass) reinforcing fibres and a resin matrix in which these fibres are embedded. The fibres may be arranged in different configurations, for example in a unidirectional layer having the fibres aligned and parallel to each other in a single direction, or as a 'fabric' where the fibres are interwoven in two directions perpendicular to each other, called warp and weft. The prepregs are generally prepared in the form of tape and wound up into rolls.

Therefore, for positioning on the surface 10 the prepreg is first cut to the dimensions and shapes required.

Before positioning the laminate 20, the lamination surface 10 is covered with a separator film 30 having a low sliding friction with respect to the resin of the prepreg (and, as will be seen below, also with respect to the forming mould). The term "separator", or also "release film," is understood as meaning conventionally a plastic film arranged generally in contact with the laminate 20 and treated in a manner such that it does not bond with the material of this laminate 20. In general, the separator film is also arranged to allow the volatile substances and the air present in the laminate 20 to pass through it. The term "low friction" is understood as meaning that the separator film 30 allows relative sliding between itself and the surface of the laminate 20 in contact therewith (and with the surface of the mould which is described further below), for the purposes which will be clarified later. Preferably, the separator film is polyvinyl fluoride (PVF).

Once the separator film 30 has been placed in position, lateral strips of peel ply 22 are positioned such that the lateral ends of the strip-shaped laminate 20 adhere to them when the layers of said laminate 20 are deposited. The term "peel ply" is understood aS meaning conventionally a layer of fabric, typically polyester, added to protect the external surfaces of the laminate 20 or to modify its surface finish for subsequent processing. In the specific example here described, the strips of peel ply 22 have the function of protecting the areas intended to form the lateral flanges of the stringer with an omega-shaped cross-section, in view of its subsequent bonding to a fuselage panel. Therefore, depending on the type of structural element to be obtained with the method according to the invention, the lateral strips of peel ply may also not be present.

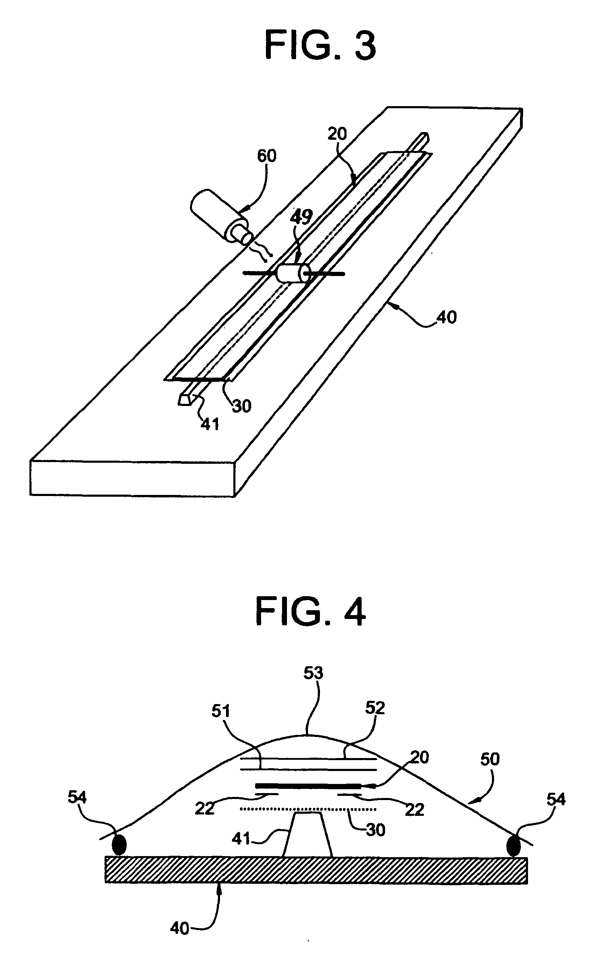

The flat laminate 20 then undergoes further processing operations per se conventional, for example the performance of a series of reference holes 31 (illustrated in Figure 2) positioned along the middle thereof. At this point the low-friction separator film 30 is positioned underneath the laminate 20. In the following, the separator film 30 will therefore be referred to as bottom separator film, with reference to the of a sketch vacuum bag illustrated in Figure 4.

After stratification on the surface 10 has been completed, the flat laminate 20 undergoes a preliminary compaction step (inside a vacuum bag), which has the conventional function of compacting together the layers of prepreg and reducing the quantity of air pockets present within the material and causing bonding of the separator film to the laminate.

Subsequently, as shown in Figure 2, the laminate 20 is positioned on a mould 40. This mould 40 comprises a convex male portion 41 extending along the mould and projecting vertically from it. The term "convex" refers to the shape of the cross-section of the male portion 41, in the sense that it has no inward recesses.

More specifically, the laminate 20 is positioned on the convex male portion 41. To this end, to ensure correct positioning, a series of reference pins 42, able to engage inside respective holes 31 of the laminate 20, are arranged along the male portion 41.

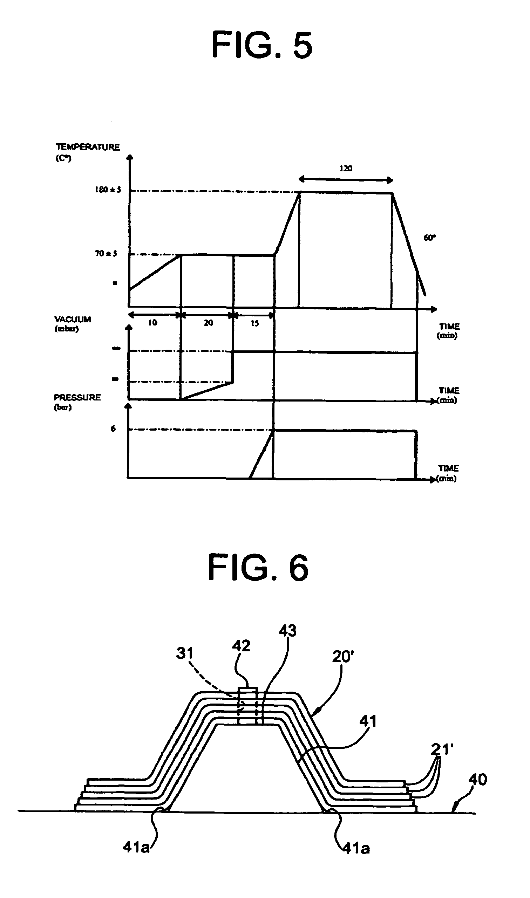

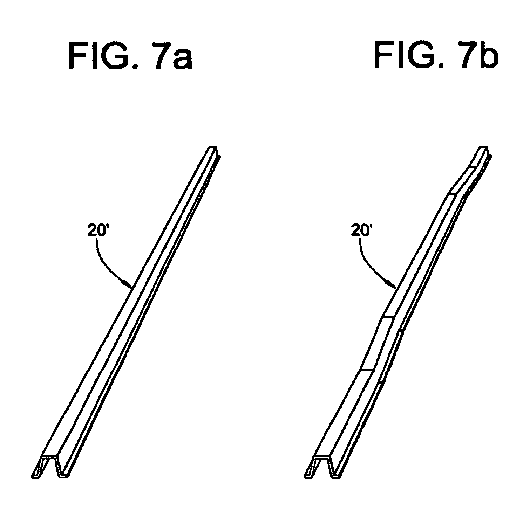

In the example shown, the straight convex male portion has a cross-section with a substantially trapezoidal shape. As a result of this section it is possible to obtain at the end of the process a structural element with an omega-shaped cross-section (see Figures 6, 7a and 7b). As stated above, the cross-section of the structural element is not critical for the purposes of the invention, and therefore also the cross-section of the male portion may be different, provided it is convex.

In the direction of its length, the male portion 41 (as well as the mould 40 itself) may have a profile which is constant or variable, and in particular may have ramps or local irregularities (joggles) and variations in thickness. With the first solution it is possible to produce a structural element having a constant profile in the direction of its length (see Figure 7a), while with the second solution it is possible to produce a structural element having a variable profile in the direction of its length, as required for example in the case of stringers for fuselage panels and other primary structures (see Figure 7b).

As can be seen in Figure 2, the bottom low-friction separator film 30 is situated between the laminate 20 and the underlying part of the mould 40. In particular, the central part of this film is compressed between the top part 43 of the male portion 41 and the laminate 20.

Preferably, the laminate 20 undergoes an operation for adaptation to the top part 43 of the male portion 41 of the mould 40, as shown in Figure 3. To this end, the middle part of the laminate 20 is compressed against the male portion 41 of the mould 40 by compression means 49, such as rollers or brushes (operated manually or automatically), which are slid along the laminate 20 while heating means 60, such as heat guns (operated manually or automatically), act to soften locally the resin of the prepreg material.

A vacuum bag 50 is then prepared on the laminate 20 on the mould 40, as shown in Figure 4.

The preparation of the vacuum bag envisages initially covering the laminate 20 with a top separator film 51. The term "separator", or also "release film," is understood as meaning conventionally a plastic film positioned generally in contact with the laminate 20 and treated in such a mannet that it does not bond with the material of this laminate 20. In general, the separator film is also arranged to allow the volatile substances and the air present in the laminate 20 to pass through it. The top separator film 51 is, for example, of fluorinated ethylene-propylene (FEP).

This top separator film 51 is then covered with a breather layer 52 having a set thickness (preferably in the range 0.12 mm - 0.15 mm). The term "breather layer" is understood as meaning conventionally a material which has the function of keeping the vacuum bag separated from the underlying parts, thereby creating a continuous path which allows the air and the volatile substances to be drawn off. The expression "set thickness substantially unaffected by the conditions of the temperature, vacuum and pressure cycle" is understood as meaning that the breather layer 52 is a material such as to retain a substantially unchanged thickness during the temperature, vacuum and pressure cycle performed in an autoclave. The materials conventionally used as breather materials in the aviation industry have the disadvantage that they deform at the pressures present in an autoclave. The inventors of the present invention have noticed that instead the materials normally used as peel ply (particularly polyester fabrics), when used as a breather layer in the present invention, allow a compromise between adequate breather and control of the thickness of the breather layer 52 to be achieved.

Finally, the vacuum bag is closed by applying hermetically a high-elongation vacuum bag film 53 onto the mould 40. The vacuum bag film must be applied so as to be substantially tight, enclosing the laminate 20 in the manner of a tent. This prevents the vacuum bag film 53 from being able to enter underneath the flat laminate 20 when the vacuum is created inside the bag, which could cause manufacturing defects in the structural component or the risk of breakage of the bag. Preferably, the vacuum bag film is made of elastic nylon with a thickness of 0.05 mm and minimum elongation at break value of 375%.

Otherwise the vacuum bag is entirely conventional and comprises along its perimeter strips of conventional breather material (not shown) connected to the breather layer 52, sealing strips 54 arranged along the entire periphery of the vacuum bag, so as to make it airtight, and a plurality of vacuum valves (not shown) arranged to be connected to a vacuum system and positioned opposite the perimetral strips of breather material.

The laminate 20 with the vacuum bag 50 thus prepared then undergoes a temperature, vacuum and pressure cycle in an autoclave programmed to produce polymerization of the prepreg resin. According to the invention, this temperature, vacuum and pressure cycle is also programmed so as to comprise a forming step arranged to cause adaptation of the form of the laminate to the convex male portion of the mould, said forming step immediately preceding the polymerization of the prepreg resin.

Figure 5 shows diagrams which illustrate the progression of the temperature, vacuum and pressure in an autoclave during the method according to the invention. The numerical values indicated are intended for illustrative purposes only and may vary with variation of the resin system forming the prepreg. In particular, the values indicated relate to prepregs with carbon fibre and an epoxy resin matrix, in particular the products 8552-33-268-IM7 12k (unidirectional carbon fibre) and 8552S-37-AGP280c-AS4 - style 5HS - 3k (fabric carbon fibre) manufactured by Hexcel Composites.

As can be seen in Figure 5, the forming and curing steps are combined to form a single autoclave cycle without interruption between them. In particular, the maximum temperature reached at the end of forming (indicated at t = 70 ± 5 °C in the diagrams shown) is maintained until the start of the heat up rate for the curing process. The increase ramp of the vacuum is controlled during the forming step, so as to allow the creation of a vacuum as uniform as possible inside the vacuum bag and controlled adaptation of the laminate 20 to the form of the male portion 41 of the mould 40. Application of the vacuum is performed very slowly, i.e. at a rate of about 10 mbar/min., until the value of 200 mbar is reached. To complete the forming operation, the duration of which must be suitably defined before the start of the autoclave process, the vacuum is increased almost instantaneously to the value required for curing. Finally, the pressure inside the autoclave is increased from the ambient value to the value required for the curing process only when the forming step has been completed.

Owing to the special arrangement of the vacuum bag, the forming process can be performed in an autoclave in sequence with the curing process without the need for correction by the operator. In particular, the low-friction bottom separator film 30 allows the bottom surface of the laminate 20 to slide on the separator film 30 allowing an optimal adaptation of the form of the laminate 20 to the profile of the convex male portion 41 of the mould 40, particularly in the concave zones 41 a on the sides of the convex male portion 41, where the profile of the male portion 41 merges with the profile of the remainder of the mould 40. The low-friction requirement depends of course on the materials used and therefore cannot be quantified in absolute terms. A person skilled in the art is nevertheless capable of determining experimentally how low the friction must be between separator film and laminate and between separator film and mould in order to allow relative sliding to occur between them during application of the vacuum in the forming step.

The breather layer of set thickness 52 instead allows a substantially uniform compression to be applied over the entire laminate 20, preventing the formation of localized zones where there is a richness of resin or excessive thickening in said laminate 20.

Moreover, owing to the fact that the vacuum bag film 53 is of the high elongation type and is applied tensioned, it is ensured, on the one hand, that the film 53 cannot enter underneath the laminate 20 during the creation of a vacuum and, on the other hand, that there are no pockets below the film which prevent efficient evacuation of the air. In the example described, the requirement for high elongation properties can be quantified in absolute terms at the indicative minimum elongation at break value of 375%. A person skilled in the art is however capable of determining experimentally the degree of elongation of the vacuum bag film which is required in order to allow this film, despite being tensioned in the initial condition of the vacuum bag, to be deformed without breaking (and eventually adhering to the underlying parts) during creation of the vacuum inside the vacuum bag.

Figure 6 shows the structural component 20', obtained at the end of the autoclave process, from the flat laminate 20, where the cross-sectional form of the laminate 20 has adapted to the shape of the male portion 41 of the mould 40 (and of the parts of the mould 40 adjacent to the male portion 41) following the forming step and where the resin matrix of the prepreg layers (indicated by 21' to indicate a change in the molecular structure of the material) is now polymerized following the curing step. For the sake of illustrative simplicity, Figure 6 does not show the bottom and top separator films 30 and 51, peel ply films 22 and 52 and the vacuum bag film 53.

## Claims

1. Method for manufacturing a long structural element (20') made of composite material, wherein a mould (40) having a convex male portion (41) extending along said mould and projecting vertically from it is used, said method comprising the following steps:
- depositing in succession on a surface (10) a plurality of prepreg layers (21) so as to obtain a strip-shaped laminate (20),
- positioning the laminate (20) on said convex male portion of the mould (40) and preparing an associated vacuum bag (50), and
- subjecting said laminate on the mould (12) to a heat, vacuum and pressure cycle programmed to comprise a forming step arranged to cause adaptation of the form of the laminate (20) to the convex male portion (41) of the mould (40), and a subsequent curing step arranged to cause polymerization of the prepreg resin,
said method being **characterized in that** a bottom separator film (30) is positioned on the mould (40) before the laminate (20) is positioned thereon, in such a way as that said bottom separator film is situated between the laminate (20) and the mould (40), said bottom separator film having a low sliding friction with respect to the prepreg resin and the mould;
**in that** the vacuum bag (50) is prepared before the laminate (20) is subjected to said forming step, the preparation of the vacuum bag (50) comprising the following steps:
- covering the laminate (20) with a top separator film (51);
- covering the top separator film (51) with a ventilation layer (52) having a set thickness substantially unaffected by the conditions of the heat, vacuum and pressure cycle, and
- applying hermetically onto the mould (40) a high-stretch vacuum bag film (53) so that said vacuum bag film is substantially taut, enclosing said laminate in the manner of a tent;
and **in that** said heat, vacuum and pressure cycle is also programmed so as that said forming step is performed in autoclave in sequence with said curing step, said forming step immediately preceding said curing step.

2. Method according to Claim 1, wherein a layer of peel ply is used as a ventilation layer (52).

3. Method according to one of the preceding claims, wherein, before the preparation of the vacuum bag (50), the laminate (20) undergoes an operation for adaptation to the top part (43) of the convex male portion (41) of the mould (40).

4. Method according to Claim 3, wherein, during the adaptation step, a middle part of the laminate (20) is compressed against the male portion (41) of the mould (40) by compression means (50) which are slid along the laminate (20) while heating means (60) act to soften locally the resin of the prepreg material.

5. Method according to one of the preceding claims, wherein, during the heat, vacuum and pressure cycle, the maximum temperature reached at the end of the forming step is maintained until the start of the heating ramp for the polymerization step.

6. Method according to Claim 5, wherein, during the heat, vacuum and pressure cycle, the forming step envisages a controlled vacuum increase ramp, at the end of which the vacuum is increased almost instantaneously to a maximum value for the completion of the forming and subsequent polymerization step.

7. Method according to Claims 5 and 6, wherein, during the heat, vacuum and pressure cycle, the pressure is increased from an ambient value to a maximum value for the polymerization step once the forming step has been completed.

8. Method according to one of the preceding claims, wherein the thickness of the ventilation layer (52) is in the range 0.12 mm - 0.15 mm.

9. Method according to one of the preceding claims, wherein the vacuum bag film (53) is made of elastic nylon with a thickness of 0.05 mm and minimum elongation at break value of 375%.

## Patentansprüche

1. Verfahren zum Herstellen eines langen Strukturelements (20') aus Verbundmaterial, wobei eine Form (40) mit einem konvexen männlichen bzw. aufzunehmenden Abschnitt (41), der sich entlang der Form erstreckt und vertikal von dieser vorspringt, verwendet wird, wobei das Verfahren die folgenden Schritte umfasst:
- nacheinander Abscheiden, auf einer Fläche bzw. Oberfläche (10), einer Mehrzahl von Prepreg-Schichten (21), um ein streifenförmiges Laminat (20) zu erhalten,
- Positionieren des Laminats (20) an dem konvexen aufzunehmenden Abschnitt der Form (40) und Präparieren eines assoziierten bzw. dazugehörigen Vakuumbeutels (50), und
- Aussetzen des Laminats an der Form (12) einem Wärme-, Vakuum- und Druckzyklus, der programmiert ist, einen Form- bzw. Bildungsschritt, der vorgesehen ist, eine Anpassung der Form des Laminats (20) an den konvexen aufzunehmenden Abschnitt (41) der Form (40) zu bewirken, und einen nachfolgenden Härtungsschritt zu umfassen, der vorgesehen ist, eine Polymerisation des Prepreg-Harzes zu bewirken
wobei das Verfahren **dadurch gekennzeichnet ist, dass** ein Bodenseparatorbzw. -abscheiderfilm (30) an der Form (40) vor dem Positionieren des Laminats (20) daran positioniert wird, und zwar auf eine solche Weise, dass der Bodenseparatorfilm zwischen dem Laminat (20) und der Form (40) angeord-net ist, wobei der Bodenseparatorfilm eine geringe Gleitreibung bezüglich des Prepreg-Harzes und der Form aufweist;
dadurch, dass der Vakuumbeutel (50) präpariert wird, bevor das Laminat (20) dem Form- bzw. Bildungsschritt ausgesetzt wird, wobei das Präparieren des Vakuumbeutels (50) die folgenden Schritte umfasst:
- Abdecken des Laminats (20) mit einem oberen Separator- bzw. Abscheiderfilm (51);
- Abdecken des oberen Separatorfilms (51) mit einer Belüftungsschicht (52), die eine festgelegte Dicke aufweist, die durch die Bedingungen des Wärme-, Vakuum- und Druckzyklus im Wesentlichen unbeeinflusst bleibt, und
- hermetisches Anwenden bzw. Anlegen, auf die Form (40), eines hochdehnbaren Vakuumbeutelfilms (53), so dass der Vakuumbeutelfilm im Wesentlichen straff ist, wobei er das Laminat zeltartig umschließt;
und dadurch, dass der Wärme-, Vakuum- und Druckzyklus zudem so programmiert ist, dass der Form- bzw. Bildungsschritt in Reihe mit bzw. der Reihe nach mit dem Härtungsschritt in Autoklav durchgeführt wird, wobei der Form- bzw. Bildungsschritt dem Härtungsschritt unmittelbar vorangeht.

2. Verfahren nach Anspruch 1, wobei eine Schicht aus Abreissgewebe bzw. -lage als eine Belüftungsschicht (52) verwendet wird.

3. Verfahren nach einem der vorhergehenden Ansprüche, wobei vor dem Präparieren des Vakuumbeutels (50) das Laminat (20) einer Operation zur Anpassung an den oberen Teil (43) des konvexen aufzunehmenden Abschnitts (41) der Form (40) unterzogen wird.

4. Verfahren nach Anspruch 3, wobei während des Anpassungsschritts ein mittlerer Teil des Laminats (20) gegen den aufzunehmenden Abschnitt (41) der Form (40) durch Kompressionsmittel (50) komprimiert wird, die entlang des Laminats (20) verschoben werden, während Erwärmungsmittel (60) dahingehend wirken, das Harz des Prepreg-Materials lokal zu erweichen.

5. Verfahren nach einem der vorhergehenden Ansprüche, wobei während des Wärme-, Vakuum- und Druckzyklus die maximale Temperatur, die am Ende des Formschritts erreicht wird, bis zu dem Start der Erwärmungsrampe für den Polymerisationsschritt beibehalten wird.

6. Verfahren nach Anspruch 5, wobei während des Wärme-, Vakuum- und Druckzyklus der Formschritt eine gesteuerte bzw. geregelte bzw. kontrollierte Vakuumanstiegsrampe vorsieht, an deren Ende das Vakuum nahezu augenblicklich auf einem maximalen Wert für die Beendigung des Formschritts und nachfolgenden Polymersiationsschritts erhöht wird.

7. Verfahren nach Anspruch 5 und 6, wobei während des Wärme-, Vakuum- und Druckzyklus der Druck von einem Umgebungswert auf einem maximalen Wert für den Polymerisationsschritt erhöht wird, sobald der Formschritt beendet wurde.

8. Verfahren nach einem der vorhergehenden Ansprüche, wobei die Dicke der Belüftungsschicht (52) in dem Bereich von 0,12 mm - 0,15 mm liegt.

9. Verfahren nach einem der vorhergehenden Ansprüche, wobei der Vakuumbeutelfilm (53) aus elastischem Nylon mit einer Dicke von 0,05 mm und einem Bruchdehnungswert von 375 % besteht.

## Revendications

1. Procédé pour fabriquer un élément structural long (20') en matériau composite, dans lequel on utilise un moule (40) à partie mâle convexe (41) s'étendant le long dudit moule et faisant verticalement saillie, ledit procédé comportant les étapes suivantes :
- dépôt successif, sur une surface (10), d'une pluralité de couches de préimprégné (21) jusqu'à l'obtention d'un stratifié en forme de bande (20),
- mise en place du stratifié (20) sur ladite partie mâle convexe du moule (40) et élaboration d'une poche sous vide correspondante (50), et
- soumission dudit stratifié sur le moule (12) à un cycle d'application de chaleur, vide et pression programmé pour comprendre une étape de formage conçue pour provoquer une adaptation de la forme du stratifié (20) à la partie mâle convexe (41) du moule (40) et une étape ultérieure de durcissement conçue pour provoquer une polymérisation de la résine du pré-imprégné,
ledit procédé étant **caractérisé en ce qu'**un film inférieur de séparation (30) est placé sur le moule (40) avant que le stratifié (20) ne soit placé sur celui-ci, de telle sorte que, ledit film inférieur de séparation étant situé entre le stratifié (20) et le moule (40), ledit film inférieur de séparation ait peu de frottements par glissement par rapport à la résine du pré-impregné et au moule ;
**en ce que** la poche sous vide (50) est élaborée avant que le stratifié (20) ne soit soumis à ladite étape de formage, l'élaboration de la poche sous vide (50) comprenant les étapes suivantes :
- recouvrement du stratifié (20) avec un film supérieur de séparation (51) ;
- recouvrement du film supérieur de séparation (51) avec une couche de ventilation (52) d'une épaisseur définie sensiblement non affectée par les conditions du cycle de chaleur, vide et pression, et
- application hermétique, sur le moule (40), d'un film fortement étirable (53) de poche sous vide de façon que ledit film de poche sous vide soit sensiblement tendu, en englobant ledit stratifié à la manière d'une tente ;
et **en ce que** ledit cycle d'application de chaleur, vide et pression est également programmé de façon que ladite étape de formage soit réalisée en autoclave à la suite de ladite étape de durcissement, ladite étape de formage précédant immédiatement ladite étape de durcissement.

2. Procédé selon la revendication 1, dans lequel une couche de tissu d'arrachage sert de couche de ventilation (52).

3. Procédé selon l'une quelconque des revendications précédentes, dans lequel, avant l'élaboration de la poche sous vide (50), le stratifié (20) subit une opération visant à l'adapter à la partie supérieure (43) de la partie mâle convexe (41) du moule (40).

4. Procédé selon la revendication 3, dans lequel, pendant l'étape d'adaptation, une partie médiane du stratifié (20) est comprimée contre la partie mâle (41) du moule (40) par des moyens de compression (50) amenés à coulisser le long du stratifié (20) tandis que des moyens chauffants (60) interviennent pour ramollir localement la résine du matériau pré-imprégné.

5. Procédé selon l'une quelconque des revendications précédentes, dans lequel, pendant le cycle d'application de chaleur, de vide et de pression, la température maximale atteinte à la fin de l'étape de formage est maintenue jusqu'au début de la phase de chauffage pour l'étape de polymérisation.

6. Procédé selon la revendication 5, dans lequel, pendant le cycle d'application de chaleur, de vide et de pression, l'étape de formage présente une phase d'accentuation maîtrisée du vide au terme de laquelle le vide est porté presque instantanément à une valeur maximale pour l'achèvement du formage et l'étape de polymérisation qui suit.

7. Procédé selon les revendications 5 et 6, dans lequel, pendant le cycle d'application de chaleur, de vide et de pression, la pression est amenée à passer d'une valeur de pression ambiante à une valeur maximale pour l'étape de polymérisation une fois que l'étape de formage a pris fin.

8. Procédé selon l'une quelconque des revendications précédentes, dans lequel l'épaisseur de la couche de ventilation (52) est de 0,12 mm à 0,15 mm.

9. Procédé selon l'une quelconque des revendications précédentes, dans lequel le film (53) de la poche sous vide est en Nylon élastique doté d'une épaisseur de 0,05 mm et d'un allongement minimal à la rupture de 375 %.
